(19) Europäisches Patentamt / European Patent Office / Office européen des brevets

(11) **EP 3 055 178 B1**

(12) **EUROPÄISCHE PATENTSCHRIFT**

(45) Veröffentlichungstag und Bekanntmachung des Hinweises auf die Patenterteilung:
**27.12.2017 Patentblatt 2017/52**

(51) Int Cl.:
*B60K 6/48* (2007.10)  *F02D 17/02* (2006.01)
*B60W 50/00* (2006.01)  *B60W 20/40* (2016.01)
*B60W 10/06* (2006.01)  *B60W 10/08* (2006.01)
*F02D 13/02* (2006.01)  *F02D 29/02* (2006.01)

(21) Anmeldenummer: **14790525.1**

(22) Anmeldetag: **07.10.2014**

(86) Internationale Anmeldenummer:
**PCT/EP2014/071432**

(87) Internationale Veröffentlichungsnummer:
**WO 2015/052180 (16.04.2015 Gazette 2015/15)**

(54) **VERFAHREN ZUR STEUERUNG ZUMINDEST EINES ERSTEN ANTRIEBSAGGREGATS EINES FAHRZEUGS IN ABHÄNGIGKEIT VON BETRIEBSZUSTÄNDEN EINES ZWEITEN ANTRIEBSAGGREGATS DES FAHRZEUGS IM RAHMEN EINES UMSCHALTVORGANGS SOWIE STEUEREINRICHTUNG**

METHOD FOR CONTROLLING AT LEAST ONE FIRST DRIVE UNIT OF A VEHICLE AS A FUNCTION OF OPERATING STATES OF A SECOND DRIVE UNIT OF THE VEHICLE DURING A SWITCHOVER OPERATION, AND CONTROL DEVICE

PROCÉDÉ DE COMMANDE D'AU MOINS UN PREMIER GROUPE PROPULSEUR D'UN VÉHICULE EN FONCTION DES ÉTATS DE FONCTIONNEMENT D'UN DEUXIÈME GROUPE PROPULSEUR DU VÉHICULE DANS LE CADRE D'UNE OPÉRATION DE BASCULEMENT DE L'UN À L'AUTRE, AINSI QUE SYSTÈME DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2013 DE 102013220428**

(43) Veröffentlichungstag der Anmeldung:
**17.08.2016 Patentblatt 2016/33**

(73) Patentinhaber: **Continental Automotive GmbH 30165 Hannover (DE)**

(72) Erfinder: **JEHLE, Martin 93138 Lappersdorf (DE)**

(56) Entgegenhaltungen:
WO-A1-2012/076561    DE-A1- 19 532 128
US-A1- 2007 233 332    US-A1- 2009 229 897
US-A1- 2012 239 237    US-A1- 2013 085 634

**Beschreibung**

Es wird ein Verfahren zur Steuerung zumindest eines ersten Antriebsaggregats eines Fahrzeugs in Abhängigkeit von Betriebszuständen eines zweiten Antriebsaggregats des Fahrzeugs im Rahmen eines Umschaltvorgangs bereitgestellt. Dabei kann es sich insbesondere um Verfahren zur Steuerung eines sogenannten Parallelhybridantriebs eines Fahrzeugs handeln, bei dem sowohl ein Verbrennungsmotor als auch zumindest ein Elektromotor als Antriebsaggregate vorgesehen sind und gemeinsam auf den Antriebsstrang wirken.

Bei derartigen Konstellationen kann das durch den Elektromotor bereitgestellte positive oder negative Drehmoment dazu genutzt werden, Drehmomentänderungen des Verbrennungsmotors während Umschaltvorgängen (z.B. Hubumschaltung, Zylinderdeaktivierung, Verbrennungsmodus) zu neutralisieren. Beispielsweise kann bei der Umschaltung vom hohen in den niedrigen Ventilhub ein positives Drehmoment des Elektromotos erzeugt werden, um das fehlende Moment während des Befüllens des Saugrohrs (Entdrosseln) zu überbrücken. Ein bei Ottomotoren notwendiger vorheriger Spätverzug des Zündwinkels kann so vermieden werden und Begrenzungen wie der realisierbare Zündwinkelbereich können umgangen werden. Ebenso kann ein negatives Drehmoment des Elektromotors (Generatormodus) eingesetzt werden, um ein überschüssiges Drehmoment des Verbrennungsmotors abzubauen.

Die gattungsbildende Druckschrift US 2012/01239237 A1 beschreibt einen Antrieb mit einer Verbrennungsmotor-Steuerung und einer Elektromotor-Steuerung, wobei zur Verringerung von Vibrationen Invertersteuersignale zwischen den Steuerungen übertragen werden, so dass resultierende Drehmomente an Drehmomentsteuerwerte angeglichen werden.

Üblicherweise erfolgt die Kommunikation zwischen dem dem Verbrennungsmotor zugeordneten Steuergerät und dem dem mindestens einen Elektromotor zugeordneten Steuergerät in einem festen Zeitraster, beispielsweise in einem 10ms-Raster. Wenn Funktionen der Antriebsaggregate koordiniert werden sollen, insbesondere bei Umschaltvorgängen, muss dies jedoch winkelsynchron erfolgen. Eine zeitlich exakte Bereitstellung eines Kompensationsmoments beispielsweise ist jedoch problematisch, wenn die Kommunikation zeitsynchron in einem vorgegebenen Raster erfolgt.

Das winkelsynchrone Versenden von Nachrichten dagegen wäre sehr aufwendig und es bestünde die Möglichkeit von Nachrichtenkollisionen, falls kein exklusiver Kommunikationsbus zur Verfügung steht.

Aus der DE 10 2009 027 603 A1 ist diese Problematik bekannt. Dazu wird ein Verfahren beschrieben, bei dem von mindestens einem Aggregatsteuergerät wenigstens ein Betriebsparameter zu einem Betriebsbereich eines zumindest einen zugeordneten Antriebsaggregats einem übergeordneten Steuergerät übermittelt wird, wobei von dem übergeordneten Steuergerät auf Grundlage des empfangenen, wenigstens einen Betriebsparameters ein Sollbetriebspunkt für das zumindest eine Antriebsaggregat ermittelt wird, und wobei der ermittelte Sollbetriebspunkt gemeinsam mit dem wenigstens einen Betriebsparameter an das mindestens eine Aggregatsteuergerät übermittelt wird. Es wird demnach ein übergeordnetes Steuergerät verwendet, dass eine Anpassung der Regelung der Drehmomente vornimmt.

Aufgabe von Aspekten der Erfindung ist es, mit technisch einfachen Mitteln eine zeitlich exakte Kompensation von Drehmomenten in einem System mit zumindest einem ersten Antriebsaggregat und zumindest einem zweiten Antriebsaggregat zu ermöglichen, insbesondere im Rahmen von Umschaltvorgängen.

Gemäß einem Aspekt der Erfindung wird ein Verfahren zur Steuerung zumindest eines ersten Antriebsaggregats eines Fahrzeugs in Abhängigkeit von Betriebszuständen eines zweiten Antriebsaggregats des Fahrzeugs im Rahmen eines Umschaltvorgangs bereitgestellt, wobei dem ersten Antriebsaggregat ein erstes Steuergerät und dem zweiten Antriebsaggregat ein zweites Steuergerät zugeordnet ist. Das Verfahren umfasst die Übermittlung zumindest einer Nachricht von dem zweiten Steuergerät an das erste Steuergerät, wobei die Nachricht folgendes enthält:

- einen ersten Sollwert TQ1 einer Regelgröße vor dem Umschaltvorgang;
- einen zweiten Sollwert TQ2 der Regelgröße nach dem Umschaltvorgang;
- Informationen über eine Winkelstellung einer Welle des zweiten Antriebsaggregats zum Zeitpunkt des geplanten Umschaltvorgangs.

Bei dem ersten Antriebsaggregat kann es sich insbesondere um eine elektrische Maschine, bei dem zweiten Antriebsaggregat insbesondere um einen Verbrennungsmotor handeln. Bei der Regelgröße kann es sich insbesondere um das bereitgestellte Drehmoment handeln. Steht keine Umschaltung bevor, so können TQ1 und TQ2 den gleichen Wert enthalten.

In einer anderen Ausführungsform kann es sich bei den Antriebsaggregaten um zwei Bänke eines Verbrennungsmotors handeln, die mit zwei Steuergeräten in einer Master/Slave-Konfiguration betrieben werden.

Die Informationen über die Winkelstellung enthalten die Kurbelwellenposition (oder eine zu ihr in bekannter Weise in Beziehung stehende Größe), bei welcher von TQ1 auf TQ2 umgeschaltet werden soll. Die wird von dem zweiten Steuergerät aus den bevorstehenden Umschaltvorgängen ermittelt.

Das Verfahren hat den Vorteil, dass eine Winkelinformation übermittelt wird, die den Umschaltzeitpunkt definiert. Auf diese Weise kann auch zwischen dem Versand zeitsynchroner Nachrichten der richtige Umschaltzeitpunkt ermittelt werden, auch im Falle von steigenden bzw. fallenden Drehzahlen.

In einer Ausführungsform wird als Informationen über eine Winkelstellung des zweiten Antriebsaggregats zum Zeitpunkt des geplanten Umschaltvorgangs der Winkel $\varphi_{\text{switch}}$ der Welle des zweiten Antriebsaggregats zum Zeitpunkt des geplanten Umschaltvorgangs übermittelt.

Damit das erste Steuergerät, beispielsweise der Inverter einer elektrischen Maschine, anhand der Winkelinformationen des ersten Antriebsaggregats den Umschaltzeitpunkt erkennen kann, wird der Bezug zwischen dem Kurbelwellenwinkel $\varphi$ und der Position $\vartheta$ des ersten Antriebsaggregats hergestellt werden.

Hierzu wertet das erste Steuergerät folgende lineare Gleichung aus:

$$\varphi = \vartheta * K + \varphi_0.$$

Erreicht der am ersten Steuergerät ermittelte Wert für $\varphi$ den Umschaltwinkel $\varphi_{\text{switch}}$, so schaltet das erste Steuergerät vom Sollwert TQ1 auf den Sollwert TQ2 um.

In einer Ausführungsform enthält das Verfahren daher weiterhin die Ermittlung eines Winkels $\vartheta_{\text{switch}}$ einer Welle des ersten Antriebsaggregats zum Zeitpunkt des geplanten Umschaltvorgangs durch das erste Steuergerät, wobei der Winkel $\vartheta_{\text{switch}}$ ermittelt wird aus

$$\vartheta_{\text{switch}} = (\varphi_{\text{switch}} - \varphi_0)/K,$$

wobei $\varphi_0$ der Winkelversatz der Wellen zueinander und **K** das Drehzahlverhältnis von erstem und zweitem Antriebsaggregat sind.

Sind die Drehzahlen der beiden Antriebaggregate fest gekoppelt, wie beispielsweise bei einem Kurbelwellenstartergenerator, so kann der Wert für K fest programmiert sein. Besteht jedoch keine feste Kopplung, beispielsweise beim Riemenstartergenerator mit Riemenschlupf, so kann dieser Wert auch wie im Folgenden beschrieben ermittelt werden.

In einer Ausführungsform wird zur Ermittlung des Winkelversatzes $\varphi_0$ der aktuelle Winkel $\varphi_{\text{message}}$ an das erste Steuergerät übermittelt und der aktuelle Winkel $\vartheta_{\text{message}}$ gespeichert, wobei der Winkelversatz $\varphi_0$ ermittelt wird aus

$$\varphi_0 = \varphi_{\text{message}} - \vartheta_{\text{message}} * K.$$

Alternativ kann der Winkelversatz $\varphi_0$ auch fest programmiert sein, wenn er sich nicht ändert.

Der Winkel $\varphi_{\text{message}}$ kann dabei in der gleiche Nachricht übermittelt werden wie die Werte TQ1, TQ2 und $\varphi_{\text{switch}}$. Dabei ist es vorteilhaft, wenn bei Versenden der Nachricht ein möglichst aktueller Wert des Winkels verwendet wird. Bei Empfangen der Nachricht wird ebenfalls ein möglichst aktueller Wert gespeichert, um eine hohe Genauigkeit zu erreichen.

In einer Ausführungsform wird der Winkelversatz $\varphi_0$ durch eine wiederholte Ermittlung adaptiert. Ist der Winkelversatz $\varphi_0$ während eines Motorlaufs oder eines Teils eines Motorlaufs konstant, beispielsweise im Falle einer starren Kopplung zwischen den beiden Antriebsaggregaten oder einer fest geschlossenen Kupplung dazwischen, so ist es vorteilhaft, den Winkelversatz bei niedrigen Drehzahlen zu adaptieren, wenn sich Fehler in der Zeit nur in einem sehr geringen Winkelfehler auswirken. Der so gelernte Wert kann dann ohne Nachteile in der Genauigkeit bei hohen Drehzahlen verwendet werden.

In einer alternativen Ausführungsform wird als Informationen über eine Winkelstellung des zweiten Antriebsaggregats zum Zeitpunkt des geplanten Umschaltvorgangs der Winkelversatz $\Delta\varphi_{\text{switch}}$ der Welle des zweiten Antriebsaggregats zum Zeitpunkt des geplanten Umschaltvorgangs übermittelt, wobei $\Delta\varphi_{\text{switch}} = \varphi_{\text{switch}} - \varphi_{\text{message}}$ gilt. Der Winkelversatz $\Delta\varphi_{\text{switch}}$ ist demnach die Differenz zwischen dem Winkel $\varphi_{\text{switch}}$ bei der Umschaltung und dem aktuellen Ist-Winkel $\varphi_{\text{message}}$.

Auch bei dieser Ausführungsform kann das erste Steuergerät bei Empfang der Nachricht den aktuellen Ist-Winkel $\vartheta_{\text{message}}$ speichern und hieraus den Winkel $\vartheta$ ermitteln, bei dem die Umschaltung erfolgen soll:

$$\vartheta_{\text{switch}} = \vartheta_{\text{message}} + \Delta\varphi/K.$$

Erreicht der Ist-Winkel $\vartheta$ des ersten Antriebsaggregats den Umschaltwinkel $\vartheta_{\text{switch}}$, so schaltet das erste Steuergerät vom Sollwert TQ1 auf dem Sollwert TQ2 um.

In einer Ausführungsform werden zur Ermittlung von K nacheinander zwei Ist-Werte $\varphi_{message1}$ und $\varphi_{message2}$ des Winkels der Welle des zweiten Antriebsaggregats an das erste Steuergerät übermittelt und die zugehörigen Ist-Werte $\vartheta_{message1}$ und $\vartheta_{message2}$ des Winkels des ersten Antriebsaggregats werden gespeichert, wobei das Drehzahlverhältnis K ermittelt wird aus

$$K = (\varphi_{message2} - \varphi_{message1}) / (\vartheta_{message2} - \vartheta_{message1}).$$

In einer alternativen Ausführungsform werden zur Ermittlung von K Informationen über die Drehzahl $d\varphi/dt$ des zweiten Antriebsaggregats an das erste Steuergerät übermittelt und die zugehörigen Informationen über die Drehzahl $d\vartheta/dt$ des ersten Antriebsaggregats werden gespeichert, wobei das Drehzahlverhältnis K ermittelt wird aus

$$K = (d\varphi/dt) / (d\vartheta/dt).$$

In einer Ausführungsform wird das Drehzahlverhältnis K durch eine wiederholte Ermittlung adaptiert. Somit kann eine hohe Genauigkeit in der Ermittlung von K erreicht werden.

In einer Ausführungsform des Verfahrens wird die Änderung der Regelgröße von ihrem Sollwert TQ1 vor dem Umschaltvorgang auf ihren Sollwert TQ2 nach dem Umschaltvorgang dadurch vorbereitet, dass das erste Steuergerät vor dem Umschaltzeitpunkt neue Sollwerte des ersten Antriebsaggregats einregelt.

Dies kann erreicht werden dadurch, dass das erste Steuergerät den Zeitpunkt einer bevorstehenden Umschaltung sowie den darauf folgenden Sollwert TQ2 bereits einige Zeit vor der Umschaltung kennt. Es kann daher bereits bei einem vorbestimmten Winkel vor dem Umschaltwinkel, der mit Hilfe der erwarteten zeitlichen Verzögerung z.B. für den Momentenaufbau ermittelt wird, damit begonnen werden, die neuen Sollwerte einzuregeln. Dadurch wird erreicht, dass der tatsächliche Schwerpunkt der Sollwertänderung möglichst gut mit dem gewünschten Umschaltzeitpunkt übereinstimmt.

Das Verfahren ermöglicht es, eine Momentenkompensation zum optimalen Zeitpunkt durchzuführen, wenn es sich um Vorgänge handelt, die über eine gewisse Zeit vorhersagbar sind. Hierdurch können Übergänge glatter und somit komfortabler gestaltet werden.

Gemäß einem Aspekt der Erfindung wird ein Computerprogrammprodukt bereitgestellt, aufweisend ein computerlesbares Medium und auf dem computerlesbaren Medium abgespeicherten Programmcode, der, wenn er auf einer Recheneinheit ausgeführt wird, die Recheneinheit anleitet, das beschriebene Verfahren auszuführen.

Dabei kann die Recheneinheit insbesondere ein Steuergerät zumindest eines Antriebsaggregats sein.

Gemäß einem weiteren Aspekt der Erfindung wird eine Steuereinrichtung für Antriebsaggregate eines Fahrzeugs bereitgestellt, die folgendes umfasst:

- ein erstes Steuergerät, das einem ersten Antriebsaggregat des Fahrzeugs zugeordnet ist;
- ein zweites Steuergerät, das einem zweiten Antriebsaggregat des Fahrzeugs zugeordnet ist,
- eine Kommunikationsverbindung zwischen dem ersten Steuergerät und dem zweiten Steuergerät,

wobei die Steuereinrichtung derart ausgebildet ist, dass im Rahmen eines Umschaltvorgangs eine Nachricht von dem zweiten Steuergerät an das erste Steuergerät übermittelt wird, wobei die Nachricht folgendes enthält:

- einen ersten Sollwert TQ1 einer Regelgröße vor dem Umschaltvorgang;
- einen zweiten Sollwert TQ2 der Regelgröße nach dem Umschaltvorgang;
- Informationen über eine Winkelstellung einer Welle des zweiten Antriebsaggregats zum Zeitpunkt des geplanten Umschaltvorgangs.

Ausführungsbeispiele werden nun anhand der Zeichnung näher erläutert. Die einzige Figur zeigt schematisch eine Steuereinrichtung gemäß einer Ausführungsform der Erfindung zur Koordination von zwei Antriebsaggregaten.

Die Figur zeigt schematisch den Antriebsstrang 2 eines nicht näher gezeigten Fahrzeugs, der als Parallelhybridsystem ausgebildet ist. Es ist ein erstes Antriebsaggregat 3 vorgesehen, das in der gezeigten Ausführungsform als elektrische Maschine ausgebildet ist, und ein zweites Antriebsaggregat 4, das in der gezeigten Ausführungsform als Verbrennungsmotor ausgebildet ist. Sowohl der Verbrennungsmotor als auch die elektrische Maschine stellen Drehmoment zur Verfügung und weisen eine Drehmoment übertragende Verbindung zum Antriebsstrang 2 auf. Dem ersten Antriebsaggregat 3 ist ein erstes Steuergerät 5, in dieser Ausführungsform ein Inverter, zugeordnet. Dem zweiten Antriebsaggregat 4 ist ein zweites Steuergerät 6 zugeordnet. Die Steuergeräte 5, 6 sind jeweils über Signalleitungen 7, 8 mit den Antriebsaggregaten 3, 4 verbunden und sind Teil einer Steuereinrichtung 1 für die Antriebsaggregate 3, 4.

Zwischen dem ersten Steuergerät 5 und dem zweiten Steuergerät 6 ist eine Kommunikationsverbindung 9 vorgesehen, beispielsweise ein CAN- oder FlexRay-Bus.

Die Steuereinrichtung 1 ist derart ausgebildet, dass im Rahmen eines Umschaltvorgangs über die Kommunikationsverbindung 9 eine Nachricht von dem zweiten Steuergerät 4 an das erste Steuergerät 3 übermittelt wird, wobei die Nachricht den ersten Sollwert TQ1 der Regelgröße vor dem Umschaltvorgang, den zweiten Sollwert TQ2 der Regelgröße nach dem Umschaltvorgang sowie Informationen über eine Winkelstellung einer Welle des zweiten Antriebsaggregats 4 zum Zeitpunkt des geplanten Umschaltvorgangs enthält.

Die Steuereinrichtung 1 ermöglicht es, eine Kompensation von Drehmoment des Verbrennungsmotors durch die elektrische Maschine vorzunehmen, wenn dies bei einem Umschaltvorgang erforderlich ist.

Bezugszeichenliste

1 Steuereinrichtung
2 Antriebsstrang
3 erstes Antriebsaggregat
4 zweites Antriebsaggregat
5 erstes Steuergerät
6 zweites Steuergerät
7 Signalleitung
8 Signalleitung
9 Kommunikationsverbindung

**Patentansprüche**

**1.** Verfahren zur Steuerung zumindest eines ersten Antriebsaggregats (3) eines Fahrzeugs in Abhängigkeit von Betriebszuständen eines zweiten Antriebsaggregats (4) des Fahrzeugs im Rahmen eines Umschaltvorgangs, wobei dem ersten Antriebsaggregat (3) ein erstes Steuergerät (5) und dem zweiten Antriebsaggregat (4) ein zweites Steuergerät (6) zugeordnet ist, wobei das Verfahren die Übermittlung zumindest einer Nachricht von dem zweiten Steuergerät (6) an das erste Steuergerät (5) umfasst, Verfahren, **dadurch gekennzeichnet, dass** die Nachricht folgendes enthält:

- einen ersten Sollwert TQ1 einer Regelgröße vor dem Umschaltvorgang;
- einen zweiten Sollwert TQ2 der Regelgröße nach dem Umschaltvorgang;
- Informationen über eine Winkelstellung einer Welle des zweiten Antriebsaggregats (4) zum Zeitpunkt des geplanten Umschaltvorgangs.

**2.** Verfahren nach Anspruch 1,
wobei als Informationen über eine Winkelstellung des zweiten Antriebsaggregats (4) zum Zeitpunkt des geplanten Umschaltvorgangs der Winkel $\varphi_{switch}$ der Welle des zweiten Antriebsaggregats (4) zum Zeitpunkt des geplanten Umschaltvorgangs übermittelt wird.

**3.** Verfahren nach Anspruch 2,
wobei das Verfahren weiterhin die Ermittlung eines Winkels $\vartheta_{switch}$ einer Welle des ersten Antriebsaggregats (3) zum Zeitpunkt des geplanten Umschaltvorgangs durch das erste Steuergerät (5) enthält, wobei der Winkel $\vartheta_{switch}$ ermittelt wird aus

$$\vartheta_{switch} = (\varphi_{switch} - \varphi_0)/K,$$

wobei $\varphi_0$ der Winkelversatz der Wellen zueinander und **K** das Drehzahlverhältnis von erstem und zweitem Antriebsaggregat (3, 4) sind.

**4.** Verfahren nach Anspruch 3,

wobei zur Ermittlung des Winkelversatzes $\varphi_0$ der aktuelle Winkel $\varphi_{message}$ an das erste Steuergerät (3) übermittelt und der aktuelle Winkel $\vartheta_{message}$ gespeichert wird, wobei der Winkelversatz $\varphi_0$ ermittelt wird aus

$$\varphi_0 = \varphi_{message} - \vartheta_{message} * K.$$

5. Verfahren nach Anspruch 4,
   wobei der Winkelversatz $\varphi_0$ durch eine wiederholte Ermittlung adaptiert wird.

6. Verfahren nach Anspruch 1,
   wobei als Informationen über eine Winkelstellung des zweiten Antriebsaggregats (4) zum Zeitpunkt des geplanten Umschaltvorgangs der Winkelversatz $\Delta\varphi_{switch}$ der Welle des zweiten Antriebsaggregats (4) zum Zeitpunkt des geplanten Umschaltvorgangs übermittelt wird, wobei

$$\Delta\varphi_{switch} = \varphi_{switch} - \varphi_{message}$$

gilt.

7. Verfahren nach Anspruch 6,
   wobei das Verfahren weiterhin die Ermittlung eines Winkels $\vartheta_{switch}$ einer Welle des ersten Antriebsaggregats (3) zum Zeitpunkt des geplanten Umschaltvorgangs durch das erste Steuergerät (5) enthält, wobei der Winkel $\vartheta_{switch}$ ermittelt wird aus

$$\vartheta_{switch} = \vartheta_{message} - \Delta\varphi_{switch}/K,$$

wobei $\vartheta_{message}$ der bei Empfang der Nachricht durch das erste Steuergerät (5) gespeicherte Winkel der Welle des ersten Antriebsaggregats (3) und **K** das Drehzahlverhältnis von erstem und zweitem Antriebsaggregat (3, 4) sind.

8. Verfahren nach einem der Ansprüche 1 bis 7,
   wobei zur Ermittlung von K nacheinander zwei Ist-Werte $\varphi_{message1}$ und $\varphi_{message2}$ des Winkels der Welle des zweiten Antriebsaggregats (4) an das erste Steuergerät (5) übermittelt werden und die zugehörigen Ist-Werte $\vartheta_{message1}$ und $\vartheta_{message2}$ des Winkels des ersten Antriebsaggregats (3) gespeichert werden, wobei das Drehzahlverhältnis K ermittelt wird aus

$$K = (\varphi_{message2} - \varphi_{message1})/(\vartheta_{message2} - \vartheta_{message1}).$$

9. Verfahren nach einem der Ansprüche 1 bis 7,
   wobei zur Ermittlung von K Informationen über die Drehzahl $d\varphi/dt$ des zweiten Antriebsaggregats (4) an das erste Steuergerät (5) übermittelt werden und die zugehörigen Informationen über die Drehzahl $d\vartheta/dt$ des ersten Antriebsaggregats (3) gespeichert werden, wobei das Drehzahlverhältnis K ermittelt wird aus

$$K = (d\varphi/dt)/(d\vartheta/dt).$$

10. Verfahren nach Anspruch 8 oder 9,
    wobei das Drehzahlverhältnis K durch eine wiederholte Ermittlung adaptiert wird.

11. Verfahren nach einem der Ansprüche 1 bis 10,
    wobei die Änderung der Regelgröße von ihrem Sollwert TQ1 vor dem Umschaltvorgang auf ihren Sollwert TQ2 nach dem Umschaltvorgang dadurch vorbereitet wird, dass das erste Steuergerät (5) vor dem Umschaltzeitpunkt neue Sollwerte des ersten Antriebsaggregats (3) einregelt.

12. Computerprogrammprodukt, aufweisend ein computerlesbares Medium und auf dem computerlesbaren Medium abgespeicherten Programmcode, der, wenn er auf einer Recheneinheit ausgeführt wird, die Recheneinheit anleitet, ein Verfahren nach einem der vorhergehenden Ansprüche auszuführen.

13. Steuereinrichtung (1) für Antriebsaggregate (3, 4) eines Fahrzeugs, die folgendes umfasst:

- ein erstes Steuergerät (5), das einem ersten Antriebsaggregat (3) des Fahrzeugs zugeordnet ist;
- ein zweites Steuergerät (6), das einem zweiten Antriebsaggregat (4) des Fahrzeugs zugeordnet ist,
- eine Kommunikationsverbindung (9) zwischen dem ersten Steuergerät (5) und dem zweiten Steuergerät (6),

wobei die Steuereinrichtung (1) derart ausgebildet ist, dass im Rahmen eines Umschaltvorgangs eine Nachricht von dem zweiten Steuergerät (6) an das erste Steuergerät (5) übermittelt wird, Steuereinrichtung, **dadurch gekennzeichnet, dass** die Nachricht folgendes enthält:

- einen ersten Sollwert TQ1 einer Regelgröße vor dem Umschaltvorgang;
- einen zweiten Sollwert TQ2 der Regelgröße nach dem Umschaltvorgang;
- Informationen über eine Winkelstellung einer Welle des zweiten Antriebsaggregats (4) zum Zeitpunkt des geplanten Umschaltvorgangs.

## Claims

1. Method for controlling at least one first drive unit (3) of a vehicle in dependence upon operating states of a second drive unit (4) of the vehicle during a switchover operation, wherein a first control unit (5) is allocated to the first drive unit (3) and a second control unit (6) is allocated to the second drive unit (4), wherein the method includes transmitting at least one data packet from the second control unit (6) to the first control unit (5), which method is **characterized in that** the data packet includes the following:

- a first desired value TQ1 of a control variable prior to the switchover operation;
- a second desired value TQ2 of the control variable after the switchover operation;
- data regarding an angle position of a shaft of the second drive unit (4) at the point in time of the planned switchover operation.

2. Method according to Claim 1,
wherein the angle $\varphi_{\mathbf{switch}}$ of the shaft of the second drive unit (4) at the point in time of the planned switchover operation is transmitted as data regarding an angle position of the second drive unit (4) at the point in time of the planned switchover operation.

3. Method according to Claim 2,
wherein furthermore the method includes ascertaining an angle $\vartheta_{\mathbf{switch}}$ of a shaft of the first drive unit (3) at the point in time of the planned switchover operation by means of the first control unit (5), wherein the angle $\vartheta_{\mathbf{switch}}$ is ascertained from:

$$\vartheta_{\mathrm{switch}} = (\varphi_{\mathrm{switch}} - \varphi_0)/K,$$

wherein $\varphi_{\mathbf{0}}$ represents the angle offset of the shafts with respect to one another and **K** represents the rotational speed ratio of the first and second drive unit (3, 4).

4. Method according to Claim 3,
wherein, so as to ascertain the angle offset $\varphi_{\mathbf{0}}$, the current angle $\varphi_{\mathbf{message}}$ is transmitted to the first control unit (3) and the current angle $\vartheta_{\mathbf{message}}$ is stored, wherein the angle offset $\varphi_{\mathbf{0}}$ is ascertained from:

$$\varphi_0 = \varphi_{\mathrm{message}} - \vartheta_{\mathrm{message}} * K.$$

5. Method according to Claim 4,
wherein the angle offset $\varphi_{\mathbf{0}}$ is adapted by means of repeating the ascertaining process.

6. Method according to Claim 1,
wherein the angle offset $\Delta\varphi_{\text{switch}}$ of the shaft of the second drive unit (4) at the point in time of the planned switchover operation is transmitted as data regarding an angle position of the second drive unit (4) at the time of the planned switchover operation, wherein the following applies:

$$\Delta\varphi_{\text{switch}} = \varphi_{\text{switch}} - \varphi_{\text{message}}.$$

7. Method according to Claim 6,
wherein the method further includes ascertaining an angle $\vartheta_{\text{switch}}$ of a shaft of the first drive unit (3) at the point in time of the planned switchover by means of the first control unit (5), wherein the angle $\vartheta_{\text{switch}}$ is ascertained from:

$$\vartheta_{\text{switch}} = \vartheta_{\text{message}} - \Delta\varphi_{\text{switch}}/K,$$

wherein $\vartheta_{\text{message}}$ represents the angle of the shaft of the first drive unit (3) that is stored when the data packet is received by means of the first control unit (5) and **K** represents the rotational speed ratio of the first and second drive unit (3, 4).

8. Method according to any one of Claims 1 to 7,
wherein so as to ascertain K one after the other two actual values $\varphi_{\text{message1}}$ and $\varphi_{\text{message2}}$ of the angle of the shaft of the second drive unit (4) is transmitted to the first control unit (5) and the associated actual values $\vartheta_{\text{message1}}$ and $\vartheta_{\text{message2}}$ of the angle of the first drive unit (3) are stored, wherein the rotational speed ratio K is ascertained from:

$$K = (\varphi_{\text{message2}} - \varphi_{\text{message1}}) / (\vartheta_{\text{message2}} - \vartheta_{\text{message1}}).$$

9. Method according to any one of Claims 1 to 7,
wherein so as to ascertain K data regarding the rotational speed $d\varphi/\text{dt}$ of the second drive unit (4) are transmitted to the first control unit (5) and the associated data regarding the rotational speed $d\vartheta/\text{dt}$ of the first drive unit (3) are stored, wherein the rotational speed ratio K is ascertained from:

$$K = (d\varphi/\text{dt}) / (d\vartheta/\text{dt}).$$

10. Method according to Claim 8 or 9,
wherein the rotational speed ratio K is adapted by means of repeating the ascertaining process.

11. Method according to any one of Claims 1 to 10,
wherein the change in the control variable from its desired value TQ1 prior to the switchover operation to its desired value TQ2 after the switchover operation is prepared by virtue of the fact that the first control unit (5) provides new desired values of the first drive unit (3) prior to the point in time of the switchover.

12. Computer program product comprising a computer-readable medium and program code that is stored on the computer-readable medium and that, when it is performed on a computing unit, instructs the computer unit to perform a method according to any one of the preceding claims.

13. Control device (1) for drive units (3, 4) of a vehicle, said control device comprising the following:

   - a first control unit (5) that is allocated to a first drive unit (3) of the vehicle;
   - a second control unit (6) that is allocated to a second drive unit (4) of the vehicle,
   - a communication connection (9) between the first control unit (5) and the second control unit (6),

wherein the control device (1) is embodied in such a manner that during a switching operation a data packet is transmitted from the second control unit (6) to the first control unit (5), which control device is **characterized in that** the data packet includes the following:

- a first desired value TQ1 of the control variable prior to the switchover;
- a second desired value TQ2 of the control variable after the switchover;
- data regarding an angle position of a shaft of the second drive unit (4) at the point in time of the planned switchover.

**Revendications**

1. Procédé pour commander au moins un premier groupe propulseur (3) d'un véhicule en fonction d'états opérationnels d'un deuxième groupe propulseur (4) du véhicule dans le cadre d'une opération de permutation, un premier contrôleur (5) étant associé au premier groupe propulseur (3) et un deuxième contrôleur (6) au deuxième groupe propulseur (4), le procédé comprenant la communication d'au moins un message du deuxième contrôleur (6) au premier contrôleur (5), procédé **caractérisé en ce que** le message contient les éléments suivantes :

   - une première valeur de consigne TQ1 d'une grandeur de régulation avant l'opération de permutation ;
   - une deuxième valeur de consigne TQ2 de la grandeur de régulation après l'opération de permutation ;
   - des informations à propos d'une position angulaire d'un arbre du deuxième groupe propulseur (4) à l'instant de l'opération de permutation planifiée.

2. Procédé selon la revendication 1, les informations communiquées à propos d'une position angulaire du deuxième groupe propulseur (4) à l'instant de l'opération de permutation planifiée étant l'angle $\varphi_{switch}$ de l'arbre du deuxième groupe propulseur (4) à l'instant de l'opération de permutation planifiée.

3. Procédé selon la revendication 2, le procédé comprenant en outre la détermination d'un angle $\vartheta_{switch}$ d'un arbre du premier groupe propulseur (3) à l'instant de l'opération de permutation planifiée par le premier contrôleur (5), l'angle $\vartheta_{switch}$ étant déterminé à partir de

$$\vartheta_{switch} = (\varphi_{switch} - \varphi_0)/K,$$

$\varphi_0$ désignant le décalage angulaire des arbres entre eux et K le rapport des vitesses de rotation entre le premier et le deuxième groupe propulseur (3, 4).

4. Procédé selon la revendication 3, la détermination du décalage angulaire $\varphi_0$ étant effectuée en communiquant l'angle actuel $\varphi_{message}$ au premier contrôleur (3) et en mettant en mémoire l'angle actuel $\varphi_{message}$, le décalage angulaire $\varphi_0$ étant déterminé à partir de

$$\varphi_0 = \varphi_{message} - \varphi_{message}*K.$$

5. Procédé selon la revendication 4, le décalage angulaire $\varphi_0$ étant adapté par une détermination répétée.

6. Procédé selon la revendication 1, les informations communiquées à propos d'une position angulaire du deuxième groupe propulseur (4) à l'instant de l'opération de permutation planifiée étant le décalage angulaire $\Delta\varphi_{switch}$ de l'arbre du deuxième groupe propulseur (4) à l'instant de l'opération de permutation planifiée, avec

$$\Delta\varphi_{switch} = \varphi_{switch} - \varphi_{message}.$$

7. Procédé selon la revendication 6, le procédé comprenant en outre la détermination d'un angle $\vartheta_{switch}$ d'un arbre du premier groupe propulseur (3) à l'instant de l'opération de permutation planifiée par le premier contrôleur (5), l'angle $\vartheta_{switch}$ étant déterminé à partir de

$$\vartheta_{switch} = \vartheta_{message} - \Delta\varphi_{switch}/K,$$

$\vartheta_{message}$ désignant l'angle de l'arbre du premier groupe propulseur (3) mis en mémoire par le premier contrôleur (5) lors de la réception du message et K le rapport des vitesses de rotation entre le premier et le deuxième groupe propulseur (3, 4) .

8. Procédé selon l'une des revendications 1 à 7, la détermination de K étant effectuée en communiquant l'une après l'autre deux valeurs réelles $\varphi_{message1}$ et $\varphi_{message2}$ de l'angle de l'arbre du deuxième groupe propulseur (4) au premier contrôleur (3) et en mettant en mémoire les valeurs réelles $\vartheta_{message1}$ et $\vartheta_{message2}$ associées de l'angle du premier groupe propulseur (3), le rapport des vitesses de rotation K étant déterminé à partir de

$$K = (\varphi_{message2} - \varphi_{message1}) / (\vartheta_{message2} - \vartheta_{message1}).$$

9. Procédé selon l'une des revendications 1 à 7, la détermination de K étant effectuée en communiquant des informations à propos de la vitesse de rotation $d\varphi/dt$ du deuxième groupe propulseur (4) au premier contrôleur (5) et en mettant en mémoire les informations correspondantes à propos de la vitesse de rotation $d\vartheta/dt$ du premier groupe propulseur (3), le rapport des vitesses de rotation K étant déterminé à partir de

$$K = (d\varphi/dt) / (d\vartheta/dt).$$

10. Procédé selon la revendication 8 ou 9, le rapport des vitesses de rotation K étant adapté par une détermination répétée.

11. Procédé selon l'une des revendications 1 à 10, la modification de la grandeur de régulation de sa valeur de consigne TQ1 avant l'opération de permutation à sa valeur de consigne TQ2 après l'opération de permutation étant préparée en ce que le premier contrôleur (5) établit de nouvelles valeurs de consigne du premier groupe propulseur (3) avant l'instant de la permutation.

12. Produit de programme informatique, comprenant un support lisible par ordinateur et un code de programme enregistré sur le support lisible par ordinateur qui, lorsqu'il est exécuté sur une unité de calcul, amène l'unité de calcul à mettre en oeuvre un procédé selon l'une des revendications précédentes.

13. Dispositif de commande (1) pour des groupes propulseurs (3, 4) d'un véhicule, comprenant les éléments suivantes :

- un premier contrôleur (5) qui est associé au premier groupe propulseur (3) du véhicule ;
- un deuxième contrôleur (6) qui est associé au deuxième groupe propulseur (4) du véhicule,
- une liaison de communication (9) entre le premier contrôleur (5) et le deuxième contrôleur (6),

le dispositif de commande (1) étant configuré de telle sorte que dans le cadre d'une opération de permutation, un message est communiqué du deuxième contrôleur (6) au premier contrôleur (5), dispositif de commande, **caractérisé en ce que** le message contient les éléments suivantes :

- une première valeur de consigne TQ1 d'une grandeur de régulation avant l'opération de permutation ;
- une deuxième valeur de consigne TQ2 de la grandeur de régulation après l'opération de permutation ;
- des informations à propos d'une position angulaire d'un arbre du deuxième groupe propulseur (4) à l'instant de l'opération de permutation planifiée.

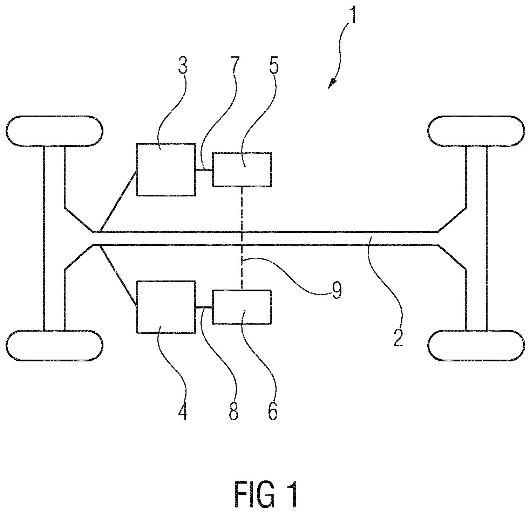

FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 201201239237 A1
- DE 102009027603 A1